Europäisches Patentamt

European Patent Office

Office européen des brevets

(19)

(11) Numéro de publication: **0 228 358**
**B1**

## (12)    FASCICULE DE BREVET EUROPEEN

(45) Date de publication du fascicule du brevet:
07.02.90

(51) Int. Cl.⁴: **B60P 7/13**

(21) Numéro de dépôt: **86870202.8**

(22) Date de dépôt: **30.12.86**

(54)  **Dispositif pour le verrouillage d'un conteneur sur un élément mobile.**

(30) Priorité: 30.12.85 BE 1011409
            27.06.86 BE 1011512

(43) Date de publication de la demande:
08.07.87 Bulletin 87/28

(45) Mention de la délivrance du brevet:
07.02.90 Bulletin 90/6

(84) Etats contractants désignés:
BE DE FR GB IT NL

(56) Documents cités:
EP-A- 0 037 466
DE-A- 2 128 872
DE-A- 2 946 224

(73) Titulaire: **EUROPE TRAILER COMPONENTS,**
**Gerstenstraat 27, B-9440 Erembodegem(BE)**

(72) Inventeur: **De Wilde, Léon, Gerstenstraat 27,**
**B-9440 Erembodegem(BE)**

(74) Mandataire: **Vanderperre, Robert et al, Bureau VANDER**
**HAEGHEN 63 Avenue de la Tolson d'Or,**
**B-1060 Bruxelles(BE)**

ACTORUM AG

## Description

La présente invention est relative à un dispositif pour le verrouillage d'un conteneur sur un élément mobile constitué d'une fermeture rotative introduite par enfoncement dans une chambre, cette fermeture comprenant:

– un boulon de serrage à tête de marteau qui est pourvu à sa partie supérieure d'une collerette et d'une partie carrée et à sa partie inférieure d'un embout sur lequel est fixé un anneau de limitation;

– une chambre réalisée dans un boîtier ayant une armure rigide et consistant en une plaque supérieure présentant une découpe et une partie en forme de cuvette s'étendant vers le bas à partir de ladite plaque, cette cuvette étant constituée de parois de côté et d'un fond présentant une ouverture circulaire;

– un loquet monté mobile et muni d'une surface sustentatrice de la tête de marteau dans sa position d'encastrement, lesdites surfaces sustentatrices se présentant comme deux segments diamétraux, leurs côtés intérieurs capturant la partie carrée du boulon de serrage; et

– un écrou de serrage en forme d'étoile coopérant avec le boulon de serrage à tête de marteau, pour l'ancrage démontable d'une cornière ou d'une ferrure d'un conteneur, pourvue d'un trou oblong dans lequel la tête de marteau est introduite dans la position haute d'encastrement à la fermeture rotative, cet écrou possédant un col allongé avec collerette qui passe dans une ouverture de la cuvette et pouvant être serré par vissage contre un siège du loquet.

La présente invention trouve sa principale application dans le transport de marchandises pour le verrouillage de conteneurs, de conteneurs citernes et installations interchangeables ou camions ou remorques de camions, wagons de chemin de fer, pontons de navires, cales de navires ou avions.

On connaît par le document DE-A 2 128 872 un dispositif similaire pour le verrouillage d'un conteneur sur un élément mobile. Dans ce dipositif, la chambre est un manchon porteur, fixé à une plaque de support, qui est pouvue à sa partie inférieure d'un bra sur lequel prend appui un manchon de guidage.

Le manchon de guidage est pourvu d'une rainure longitudinale pour l'agrippage des segments des organes de guidage et des extrémités de la tête en forme de marteau.

Plus loin le manchon de guidage est pourvu d'une poignée qui fait saillie dans une gorge du support. Cette gorge permet la rotation de la poignée par rapport au manchon de guidage d'un angle de 90°.

On connaît également par le document DE-A 2 946 224, un dispositif pour le verrouillage d'un conteneur tel que défini précédemment. Ce dispositif comprend une chambre, un boulon de serrage à tête de marteau et un loquet déplaçable axialement par rapport à la chambre pour reprendre les forces horizontales du conteneur. Cette chambre a une ossature fixe constituée d'une plaque supérieure présentant une ouverture sensiblement rectangulaire tandis que l'écrou de serrage possède un col allongé avec une collerette qui passe dans l'ouverture de la chambre. Ledit écrou peut être serré par vissage contre un siège du loquet.

L'inconvénient de ce dispositif connu est que l'élévation du dispositif vers une position encastrée exige une deuxième manipulation manuelle.

Avec une première main, on défait le boulon de serrage en forme d'étoile et on soulève la vis de serrage à tête en forme de marteau avec les organes de guidage des segments du loquet vers la position haute. Ensuite avec la deuxième main, on tourne la poignée du manchon de guidage d'environ 90°, de sorte que les grosses parties de la paroi du manchon de guidage viennent avec leurs parties inférieures en dessous des segments.

L'objet de l'invention est de fournir un verrou pour conteneur, qui est manipulé d'une seule main. Ceci est réalisé grâce au fait que la découpe présente une section lobée comprenant quatre lobes de forme et de dimension telles que le loquet peut être amené d'une première paire de lobes opposés vers une seconde paire de lobes opposés que le loquet et la tête de marteau du boulon de serrage peuvent être amenés dans la chambre munie sur une partie de sa hauteur de parois de renfort diamétralement disposées par rapport à l'ouverture circulaire du fond de la cuvette et montées parallèlement aux parois de côté de celle-ci, lesdites parois de renfort étant situées dans la chambre en dessous de deux lobes opposés, de sorte que le loquet prend appui sur lesdites parois lorsque le loquet est amené dans la paire de lobes opposés correspondante.

Selon une particularité de l'invention, la cuvette de la chambre du dispositif porte une barrette de verrouillage empêchant le dévissage du boulon de serrage.

Dans une forme de réalisation préférée, les parois de renfort touchent le fond des lobes correspondants de la découpe de la plaque supérieure.

Le tout est conçu en un nombre de pièces minimum pour pouvoir exécuter aussi simplement que possible tous travaux et arriver à un poids aussi faible que possible.

Les deux parois de renfort qui sont prévues dans la chambre, offrent les avantages suivants:

– elles renforcent la chambre et la stabilisent;
– elles accroissent la force de support de la chambre qui, de ce fait, peut supporter des conteneurs plus lourds tout en évitant de détériorer la fermeture rotative.

Du fait que l'écrou de serrage et le boulon de serrage forment un tout lorsque l'écrou de serrage est complètement dévissé jusque contre l'anneau de limitation, on peut apporter les segments du loquet et la tête de marteau du boulon de serrage à la juste position avec une seule main, de manière qu'on puisse effectuer les opérations de verrouillage, déverrouillage, élévation et enfoncement de façon simple.

L'écrou de serrage est en forme de cloche, de sorte que le filet du boulon de serrage est protégé contre la corrosion, le vent et la détérioration.

Ces particularités ainsi que d'autres détails ressortiront de la description suivante dans laquelle il est fait référence aux figures ci-jointes qui représentent une forme de réalisation non limitative de l'invention.

Dans ces figures:

– la figure 1 est une vue explosée en perspective de la fermeture du conteneur suivant l'invention;
– la figure 2 est une coupe axiale de la fermeture du conteneur dans laquelle la tête de marteau est dans une position d'encastrement haute;
– la figure 3 est une coupe similaire à celle de la figure 2 avec le loquet et le boulon de serrage à tête de marteau dans la position de verrouillage;

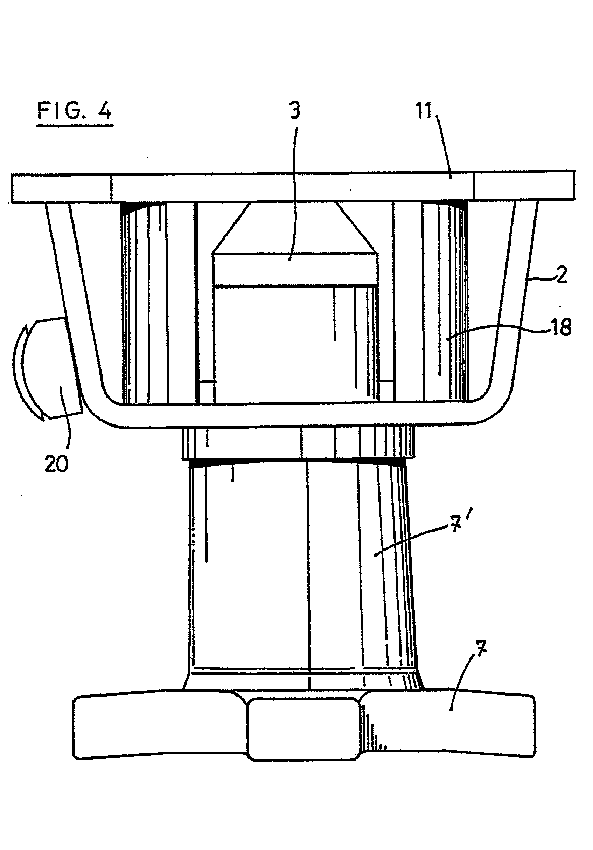

– la figure 4 est une coupe similaire à celles des figures 2 et 3 avec le loquet et le boulon de serrage à tête de marteau dans une position escamotée;

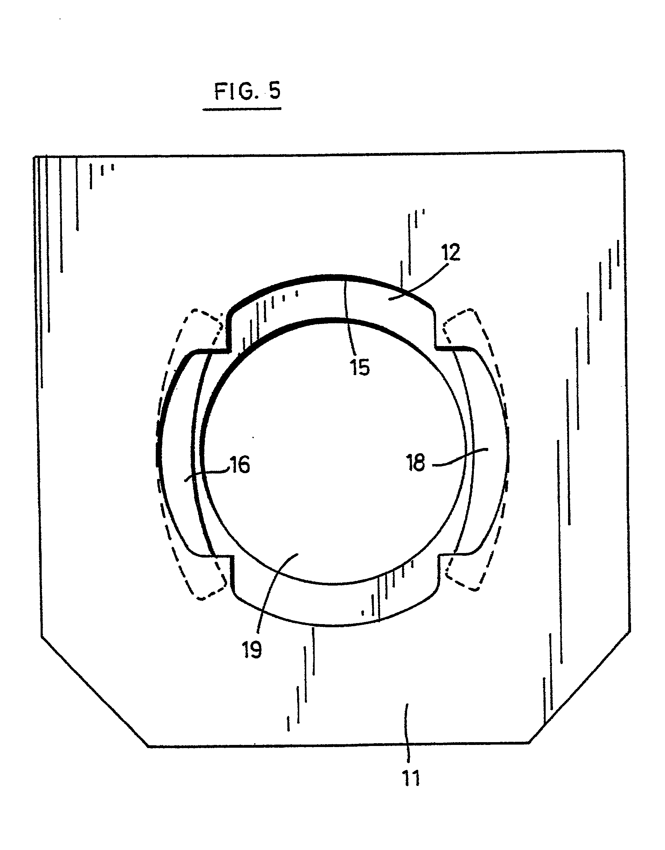

– la figure 5 est une vue de dessus de l'installation montrée aux figures 2 et 3;
– les figures 6, 7 et 8 sont respectivement:
– une vue en élévation latérale,
– une vue de dessus, et
– une vue en bout d'un loquet de verrouillage, et

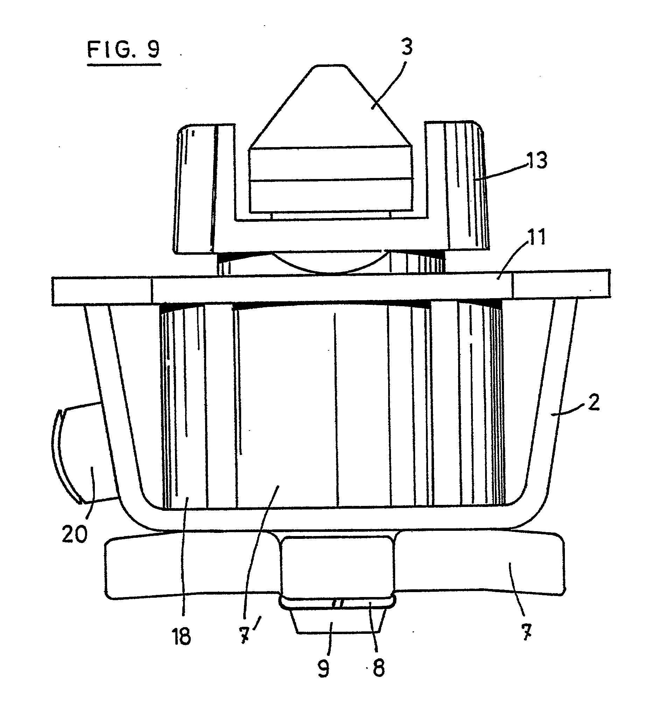

– la figure 9 est une vue en élévation latérale de l'installation dans une position dans laquelle la tête de marteau est enfoncée entre les segments.

Dans ces figures les mêmes signes de référence désignent des éléments identiques ou analogues.

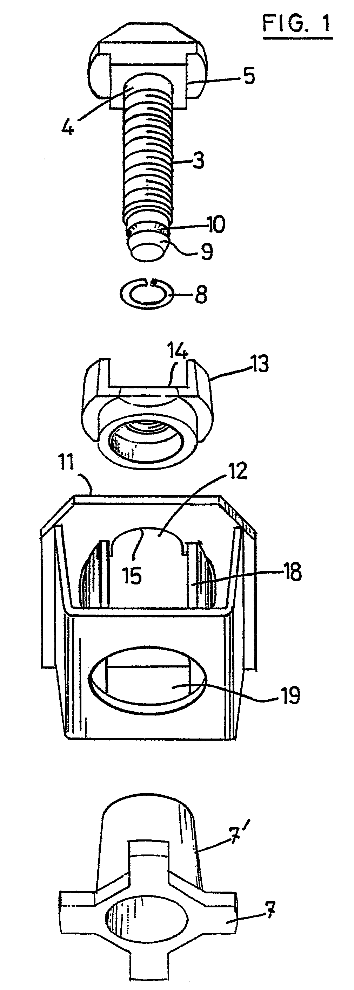

Comme montré à la figure 1, l'installation pour le verrouillage d'un conteneur non montré consiste en une fermeture rotative désignée dans son ensemble par le signe de référence 1, qui, par enfoncement, est introduite dans une chambre réalisée dans un boîtier 2.

La fermeture rotative 1 comprend un boulon de serrage à tête en forme de marteau 3 muni d'un col 4 et d'une partie carrée 5, tel qu'il est généralement connu. La tête de marteau passe dans un trou oval d'une cornière ou armature intermédiaire non montrée telle que les conteneurs en sont munis de façon connue. Sur le boulon de serrage 3, est fixé un écrou de serrage 7 en forme de cloche, qui est muni de courtes crêtes rigides en forme d'étoile.

La course de l'écrou de serrage 7 sur le boulon de serrage 3 est limitée par un anneau de limitation 8. A sa partie inférieure le boulon de serrage 3 est pourvu d'un embout 9 qui présente une encoche 10 de forme annulaire dans laquelle est fixé 1' anneau de limitation 8.

Le boulon de serrage 3 se trouve dans le boîtier 2 constitué d'une plaque supérieure 11, qui peut par exemple être fixé sur un châssis de véhicule. La plaque supérieure 11 présente une découpe 12 de section lobée dans laquelle la tête de marteau du boulon de serrage 3 peut tourner dans deux positions orthogonales, en même temps que les segments 13 d'un loquet 14 mis en place sur le boulon de serrage 3.

La fonction de l'anneau de limitation 8 à l'extrémité inférieure du boulon de serrage 3 est double. Il sert d'anneau de sécurité pour éviter de perdre l'écrou de serrage 7, lorsque ce dernier est complètement dévissé. De plus, lors du dévissage, l'écrou de serrage 7 devient fixe et forme avec le boulon de serrage à tête de marteau 3 un ensemble rigide.

Le déplacement de la tête de marteau d'une position d'encastrement à une position d'agrippage est ainsi facilité.

Le boulon de serrage peut être soulevé à l'aide d'une main et être tourné vers la gauche ou la droite d'un angle de 90°, de sorte que la tête de marteau de forme rectangulaire et les deux segments 13 du loquet 14 peuvent être amenés d'un premier lobe 15 de cette découpe 12 de section lobée vers un second lobe 16 de cette découpe 12.

Le boîtier 2 a une armature rigide consistant en une plaque supérieure 11 présentant un trou 12 en forme de feuille de trèfle, renforcée par le bas par une cuvette 17 munie sur une partie de sa hauteur de parois 18 de renfort en position relevée, diamétralement disposées par rapport à une ouverture 19 de forme circulaire dans le fond de la cuvette 17 et disposées parallèlement aux parois de côté de celle-ci, l'écrou de serrage 7 en forme de cloche présente un col 7' allongé avec collerette qui passe dans ladite ouverture 19 de la cuvette 17 et est serré par vissage contre le siège du loquet 14.

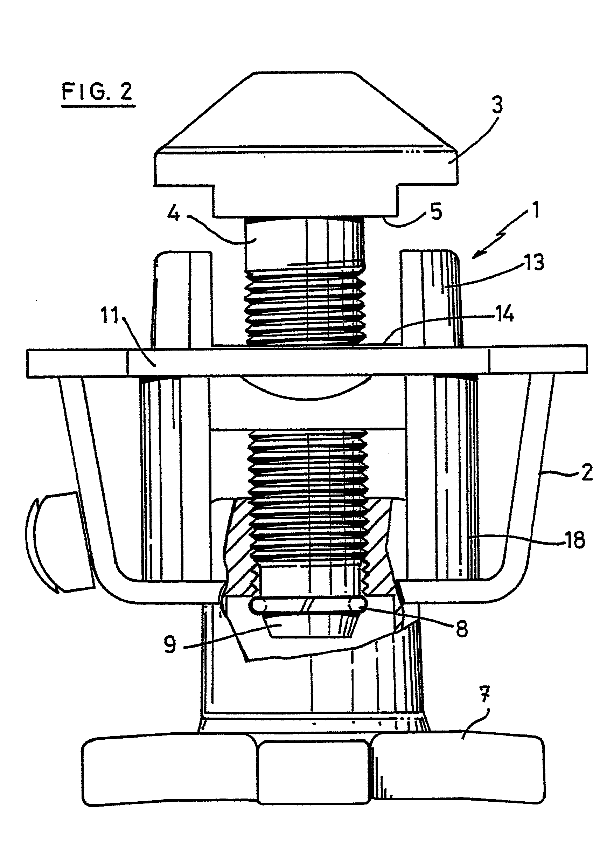

Dans sa position d'encastrement haute, montrée à la figure 2, les parties en saillie de la tête de marteau viennent au-dessus des lobes, 16 de la découpe 12 quadrilobée dans la plaque supérieure 11 et entrent dans la découpe de la plaque de support (non montrée) de l'armature du conteneur.

L'écrou de serrage est vissé sur ce dernier, de sorte que l'embout de celui-ci heurte le siège du loquet 14 et tire la tête de marteau vers le côté supérieur de la plaque supérieure

Les zones de tension de l'écrou de serrage 7 par rapport à la chambre et la pièce intermédiaire sont exécutées coniquement pour diminuer la surface d'appui de l'écrou de serrage 7 et faciliter ainsi le dévissage.

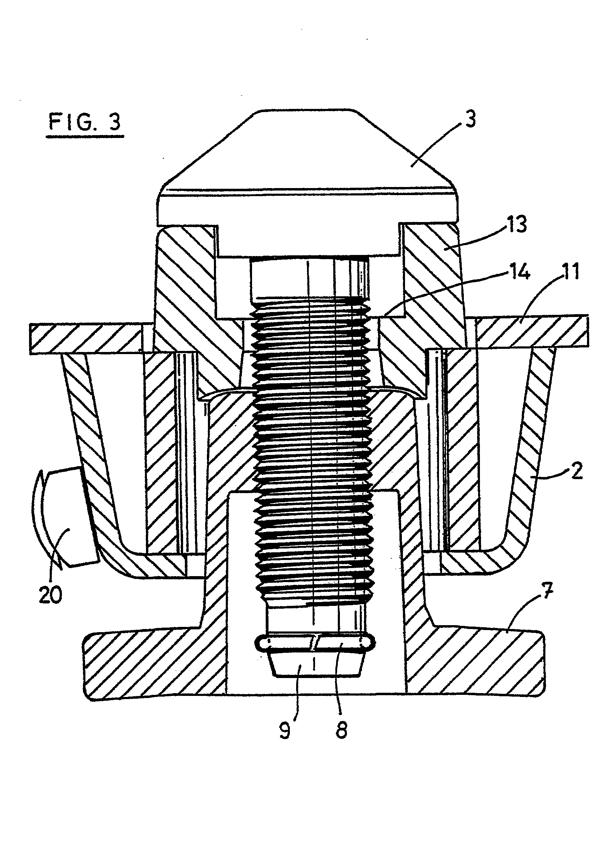

De façon connue, il s'enfonce ici dans l'espace situé entre les segments 13 et le conteneur est attaché sur le support mobile (voir figure 3).

Le loquet 14 peut être enfoncé par une rotation d'un angle de 90°, simultanément avec le boulon de serrage à tête en forme de marteau soutenue par ce loquet, jusqu'au côté supérieur de la plaque de support dans la chambre du dispositif de verrouillage de conteneur. Le boîtier porte des parois de renfort 18 sur lesquelles les segments du loquet 14 peuvent prendre appui.

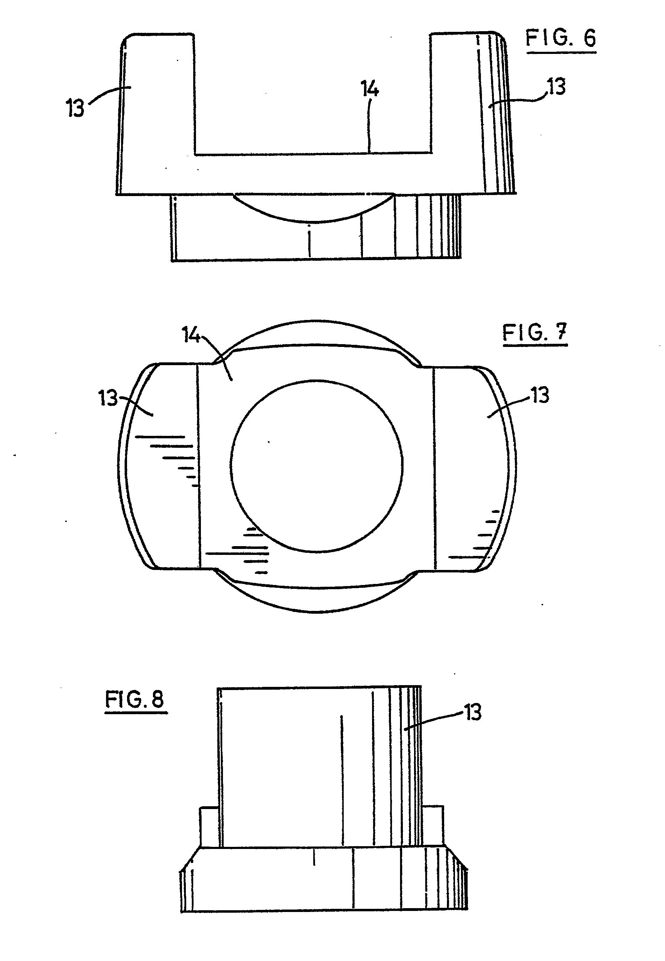

La forme du loquet 14 est représentée à la figure 7.

Par rapport à une installation connue pour le verrouillage de conteneurs sur un élément mobile, l'apport d'un moyen de guidage muni d'un levier de commande extérieurement accessible pour combattre une rotation de 90° non désirée, est totalement superflu.

Le boîtier 2 de l'installation 1 est munie de parois de renfort 18 qui peuvent reprendre, de façon non limitative, la forme du contour des segments 13 et de la tête en forme de marteau. Pour mouvoir l'installation de la position représentée à la figure 2 à celle de la figure 3, l'écrou de serrage 3 est d'abord défait et le boulon de serrage à tête de marteau 3 est légèrement soulevé, afin de libérer de la première encoche 15, les segments 13 du loquet 14. Ensuite les segments 13 du loquet 14 sont tournés d'un angle de 90°. Ainsi les segments 13 du loquet 14 prennent appui dans le second lobe 16 sur la face supérieure des parois de renfort dressées à la découpe 12, de sorte que ceux-ci peuvent être déplacés en même temps que le loquet 14 portant ceux-ci et le boulon de serrage à tête de marteau, vers le bas dans la position montrée à la figure 3.

Pour le soulèvement de l'installation vers une position d'encastrement, le boulon de serrage 3 avec la tête en forme de marteau 2 et le loquet 14 avec les segments 13 sont d'abord soulevés dans la position montrée à la figure 2, après quoi l'écrou de serrage 7 est tourné avec le boulon de serrage 3 d'un angle d'environ 90°, de sorte que les segments 13 viennent en face du premier lobe 15 de la découpe 12. Lorsque les parties soulevées sont à nouveau relâchées, les segments 13 viennent prendre appui sur l'assiette du lobe 15 comme montré à la figure 1.

L'emploi de l'installation suivant l'invention s'effectue comme suit:

Un conteneur qui, de manière connue, est muni à ses coins, et si nécessaire entre des coins disposés éventuellement le long des bords inférieurs, d'une armature, est placé grâce à la plaque de support de l'armature sur la plaque supérieure du dispositif de verrouillage de conteneur. Les plaques supérieures 11 sont fixées sur une partie mobile qui est en concordance avec la position de l'armature du conteneur. Les plaques de support sont munies selon la norme ISO TC 104 de trous oblongs qui correspondent aux découpes 12 de section lobée des plaques supérieures 11. Lors de l'ancrage d'un conteneur, la tête de marteau est d'abord placée dans une position enfoncée qui est montrée à la figure 2. Les surfaces obliques de la tête de marteau et les côtés des segments 13 servent ici de guide pour placer convenablement la plaque de support sur la plaque supérieure. En conséquence, l'écrou de serrage 7 est complètement dévissé de sorte qu'il heurte l'anneau de limitation 8.

Le boulon de serrage est soulevé, par quoi la partie carrée 5 vient au-dessus des segments 13. Sans l'aide d'une poignée rotative le boulon de serrage 3 peut être tourné de 90° et de ce fait les parties saillantes de la tête de marteau viennent par l'entaille 16 du trou 12 en forme de feuille de trèfle au-dessus des côtés allongés des trous ovales dans la plaque de support de l'armature du conteneur. Le loquet 14 entoure le coin de l'armature. Ensuite l'écrou de serrage 7 est vissé, de sorte que la tête de marteau est fermement appliquée contre la face supérieure de la plaque de support. La partie carrée 3 descend alors dans l'espace entre les segments 13 du loquet 14 et le conteneur est fixé sur le support mobile.

Lorsque le conteneur doit être enlevé, l'écrou de serrage 7 est d'abord complètement défait. Ensuite, après avoir soulevé le boulon de serrage 3, la tête de marteau est grâce à l'écrou de serrage 7, est placée par ses parties saillantes au-dessus des segments 13. L'écrou de serrage 7 est tournée d'un angle de 90° de sorte que les segments 13 peuvent descendre en même temps que la tête en forme de marteau sur le boulon de serrage 3, ainsi que les segments 13 et les parties saillantes de la tête de marteau peuvent descendre dans la chambre jusqu'au parois de renfort 18. Le conteneur avec son armature se trouve maintenant complètement libéré de la plaque de support et peut être hissé et emmené.

L'invention n'est nullement limitée à la forme de réalisation décrite ci-dessus.

**Revendications**

1. Dispositif de verrouillage d'un conteneur sur un élément mobile constitué d'une fermeture rotative (1) introduite par enfoncement dans une chambre, cette fermeture (1) comprenant:
   – un boulon de serrage à tête de marteau (3) qui est pourvu à sa partie supérieure d'une collerette (4) et d'une partie carrée (5) et à sa partie inférieure d'un embout (9) sur lequel est fixé un anneau de limitation (8);
   – une chambre réalisée dans un boîtier (2) ayant une armure rigide et consistant en une plaque supérieure (11) présentant une découpe (12) et une partie en forme de cuvette (17) s'étendant vers le bas à partir de ladite plaque (11), cette cuvette (17) étant constituée de parois de côté et d'un fond présentant une ouverture circulaire (19);
   – un loquet (14) monté mobile et muni d'une surface sustentatrice de la tête de marteau dans sa position d'encastrement, lesdites surfaces sustentatrices se prélsentant comme deux segments (13) diamétraux, leurs côtés intérieurs capturant la partie carrée (5) du boulon de serrage (3); et
   – un écrou de serrage en forme d'étoile travaillant avec le boulon de serrage à tête de marteau (3), pour l'ancrage démontable d'une cornière ou d'une ferrure d'un conteneur, pourvue d'un trou oblong dans lequel la tête de marteau est introduite dans la position haute d'encastrement à la fermeture rotative, cet écrou (7) possédant un col allongé avec collerette qui passe dans une ouverture (19) de la cuvette (17) et pouvant être serré par vissage contre un siège du loquet (14), caractérisé en ce que la découpe (12) présente une section lobée comprenant quatre lobes de forme et de dimension telles que le loquet (14) peut, être amené d'une première paire de lobes opposés (15) vers une seconde paire de lobes opposés (16) et que le loquet (14) et la tête de marteau du boulon de serrage (3) peuvent être amenés dans la chambre munie sur une partie de sa hauteur de parois de renfort (18) diamétralement disposées par rapport à l'ouverture circulaire (19) du fond de la cuvette (17) et montées parallèlement aux parois de côté de celle-ci, lesdites parois de renfort (18) étant situées dans la chambre en dessous de deux lobes opposés (16), de sorte que le loquet (14) prend appui sur lesdites parois lorsque le loquet est amené dans la paire de lobes opposés (16) correspondante.

2. Installation suivant la revendication 1, caractérisée en ce que la cuvette de la chambre (17) porte une barrette (20) pour empêcher le dévissage du boulon de serrage (7).

3. Installation suivant la revendication 1, caractérisée en ce que les parois de renfort (18) touchent le fond des lobes correspondants de la découpe (12) de la plaque supérieure (11).

**Patentansprüche**

Vorrichtung zur Verriegelung eines Behälters (Containers) auf einem beweglichen Element, bestehend aus einem Drehverschluß (1), der versenkt in eine Kammer eingeführt ist, wobei der Verschluß (1) aufweist:
— eine Hammerkopf-Klemmschraube (3), die an ihrem Oberteil mit einem Kragen (4) und einem Vierkantabschnitt (5) sowie an ihrem Unterteil mit einem Ansatzstück (9), an welchem ein Begrenzungsring (8) befestigt ist, versehen ist;
— eine Kammer, welche in einem Gehäuse (2) ausgebildet ist, das eine starre Bewehrung besitzt und aus einer oberseitigen Platte (11) mit einer Ausnehmung (12) sowie einem Abschnitt in Form einer sich von der Platte (11) nach unten erstreckenden Schale (17) besteht, wobei die Schale von Seitenwänden und einem eine kreisförmige Öffnung (19) aufweisenden Boden gebildet wird;
— eine Falle (14), welche beweglich befestigt ist und mit einer Oberfläche, welche den Hammerkopf in seiner Einbaulage abstützt, versehen ist, wobei die Stützflächen sich als zwei diametrale Segmente (13) darbieten, deren Innenseiten den Vierkantabschnitt (5) der Klemmschraube (3) umfassen, und
— eine sternförmige, mit der Hammerkopf-Klemmschraube (3) zusammenwirkende Druckmutter zur lösbaren Verankerung eines Winkels oder Beschlages eines Behälters (Containers), welcher mit einem Langloch versehen ist, in das der Hammerkopf in seiner oberen Einbaulage zur Drehverriegelung eingeführt wird, wobei diese Mutter (7) einen verlängerten Hals mit einem Kragen besitzt, welcher durch eine Öffnung (19) der Schale (17) tritt und durch Verschraubung gegen einen Aufnahmesitz der Falle (14) preßbar ist, dadurch gekennzeichnet, daß die Ausnehmung (12) einen gelappten Abschnitt aufweist, welcher vier Lappen von einer derartigen Form und Abmessung besitzt, daß die Falle (14) von einem ersten Paar von gegenüberstehenden Lappen (15) zu einem zweiten Paar von gegenüberstehenden Lappen (16) verstellbar ist und daß die Falle (14) und der Hammerkopf der Klemmschraube (3) in der in einem Höhenabschnitt mit einer Verstärkungswand (18) versehenen Kammer bezüglich der kreisförmigen Öffnung (19) des Bodens der Schale (17) diagonal gegenüberliegend und parallel zu deren Seitenwänden eingestellt werden können, wobei die genannten Verstärkungswände (18) in der Kammer unterhalb von zwei gegenüberliegenden Lappen (16) gelegen sind, derart, daß die Falle (14) sich an besagten Wänden abstützt, wenn die Falle in das entsprechende Paar von gegenüberliegenden Lappen (16) eingesetzt wird.

2. Vorrichtung nach Anspruch 1, dadurch gekennzeichnet, daß die Schale der Kammer (17) einen Bügel (20) trägt, um ein Lösen der Verschraubung der Klemmschraube (7) zu sperren.

3. Vorrichtung nach Anspruch 1, dadurch gekennzeichnet, daß die Verstärkungswände (18) den Boden der entsprechenden Lappen der Öffnung (12) der oberseitigen Platte (11) berühren.

**Claims**

1. Device for locking a container on a moveable element consisting of a rotatable closure member (1) inserted by placing it in a chamber, this closure member (1) comprising:
a hammer-headed fixing bolt (3) which is provided at its upper end with a flange (4) and with a square portion (5) and at its lower end with an end portion (9) on which is fixed a limit ring (8);
a chamber formed in a casing (2) having a rigid armour and consisting of an upper plate (11) having a cut out (12) and a dish-shaped part (17) extending downwardly from said plate (11), said dish (17) consisting of side walls and a base having a circular opening (19);
a latch (14) which is mounted to be moveable and provided with a surface for supporting the hammer head in its recessed position, said supporting surfaces taking the form of two diametral segments (13), the inner sides of which secure the square portion (5) of the fixing bolt (3);
and a star-shaped fixing nut co-operating with the hammer-headed fixing bolt (3) for the releasable anchoring of a corner iron or a hinge of a container, provided with an oblong hole in which the hammer head is inserted in the upper recess position of the rotatable closure member, said nut (7) having an elongated neck with a flange which fits into an opening (19) in the dish (17) and is adapted to be tightened by its screwing against a seat of the latch (14), characterised in that the cut out (12) has a lobed section comprising four lobes the shape and dimensions of which are such that the lock (14) may be moved from a first pair of opposite lobes (15) towards a second pair of opposite lobes (16) and the latch (14) and the hammer-head of the fixing bolt (3) may be brought into the chamber provided over part of its height with reinforcing walls (18) which are diametrically arranged relative to the circular opening (19) in the base of the dish (17) and mounted parallel to the side walls of said dish, said reinforcing walls (18) being disposed in the chamber below two opposing lobes (16), so that the latch (14) bears on said walls when the latch is introduced into the corresponding pair of opposing lobes (16).

2. Arrangement according to claim 1, characterised in that the dish of the chamber (17) has a bar (20) to prevent the fixing bolt (7) from becoming unscrewed.

3. Arrangement according to claim 1, characterised in that the reinforcing walls (18) touch the bottom of the corresponding lobes of the cut out (12) in the upper plate (11).

FIG. 1

5

4

3

10

9

8

14

13

11

12

15

18

19

7'

7

<u>FIG. 2</u>

FIG. 3

FIG. 4

FIG. 5

FIG. 6

13

14

13

FIG. 7

14

13

13

FIG. 8

13

FIG. 9